(19) **Europäisches Patentamt**

**European Patent Office**

**Office européen des brevets**

(11) **EP 1 630 721 A1**

(12) **EUROPÄISCHE PATENTANMELDUNG**

(43) Veröffentlichungstag:
01.03.2006 Patentblatt 2006/09

(51) Int Cl.:
*G06K 9/20* (2006.01)          *G06T 1/00* (2006.01)
*H04N 1/04* (2006.01)          *G07D 7/20* (2006.01)

(21) Anmeldenummer: 05013810.6

(22) Anmeldetag: 27.06.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **27.08.2004 DE 102004042024**

(71) Anmelder: **Smiths Heimann Biometrics GmbH 07743 Jena (DE)**

(72) Erfinder:
• **Burkhart, Thomas**
  **07749 Jena (DE)**
• **Hillmann, Jürgen**
  **07745 Jena (DE)**

(74) Vertreter: **Freitag, Joachim et al**
**Patentanwälte**
**Oehmke & Kollegen**
**Neugasse 13**
**07743 Jena (DE)**

(54) **Verfahren und Anordnungen zur Bildaufnahme für die Datenerfassung und Hochsicherheitspüfung von Dokumenten**

(57)    Die Erfindung betrifft ein Verfahren und eine Anordnung zur Bildaufnahme für die Datenerfassung und Sicherheitsprüfung von Dokumenten, insbesondere zur automatisierten Prüfung der Echtheit von Dokumenten, in denen versteckte Informationen zur Sicherheitsprüfung eingearbeitet sind.

Die Aufgabe, eine neue Möglichkeit zur Bildaufnahme für eine Datenerfassung und eine Echtheitsprüfung von Dokumenten zu finden, die in kürzester Zeit und mit geringem gerätetechnischem Aufwand einen automatisierten Nachweis des Vorhandenseins und eine hoch aufgelöste Aufnahme von versteckten Informationen zur Hochsicherheitsprüfung gestattet, wird erfindungsgemäß gelöst, indem ein Gesamtbild eines Dokuments mit relativ geringer Bildauflösung aufgenommenen wird, um einen Dokumententyp zu bestimmen, dem Dokumententyp gespeicherte Sicherheitsmerkmale zuzuordnen und, falls der Dokumententyp ein definiertes Sicherheitsmerkmal aufweist, für dessen Auswertung eine erheblich höhere Bildauflösung erforderlich ist, die Bildaufnahmeeinheit auf eine eingeschränkte Bildaufnahme eines interessierenden Bereichs des Dokuments mit höherer Bildauflösung umzuschalten, ein hochaufgelöstes Teilbild aufzunehmen und zur Echtheitsprüfung mit den Daten einer Datenbank zu vergleichen.

**Fig. 3**

EP 1 630 721 A1

**Beschreibung**

Die Erfindung betrifft ein Verfahren und Anordnungen zur Bildaufnahme für die Datenerfassung und Sicherheitsprüfung von Dokumenten, wobei eine Bildaufnahmeeinheit zum zweidimensionalen Abtasten eines Dokumentes auf das Dokument ausgerichtet ist. Sie findet vorzugsweise Anwendung in kombinierten Dokumentenlese- und Prüfgeräten zur automatisierten Prüfung der Echtheit von Dokumenten, in denen versteckte Informationen zur Hochsicherheitsprüfung eingearbeitet sind.

Zur Sicherung von Personaldokumenten, ID-Karten, Visa, Banknoten u.ä. [im weiteren als "Dokumente" bezeichnet] werden außer den auf die Oberfläche aufgebrachten visuellen Bild- und Textdaten vor allem optischen Beugungsstrukturen (z.B. Kinegramme), Wasserzeichen, Bilder oder Hologramme, aber auch versteckte Informationen mittels steganographischer Verfahren zur Dokumentensicherung gegen Fälschung aufgebracht.

Die versteckten (auch: steganographischen) Informationen sind nur dann lesbar, wenn das Steganographie-Verfahren bekannt ist. Ein typisches Anwendungsbeispiel ist die Einbringung von versteckten Daten in das Passbild eines Personal- oder Reisedokumentes mittels analoger oder digitaler steganographischer Verfahren. Dabei werden üblicherweise Namen und/oder Dokumentennummer im Bild versteckt, um eine Fälschung durch Austausch des Bildes zu verhindern.

Das grundsätzliche Problem bei allen eingesetzten Verfahren ist die optische Erfassung des Bildes in ausreichender Qualität und Auflösung, um eine Auswertung der versteckten Information mittels eines Computers zu ermöglichen.

Im Stand der Technik werden vornehmlich analoge steganographische Daten durch Auflegen einer speziellen Kunststofflinse sichtbar gemacht und müssen dann manuell ausgewertet werden. Ein solches Vorgehen ist beispielsweise aus der Druckschrift EP 1 345 193 A2 bekannt. Dort sind in Bildelementen oder Element-Gruppen (Superzellen) Form-, Größe-, Winkellage-, Dichte- oder Frequenzänderungen an Druckelementen innerhalb einer festgelegten Superzelle vorgenommen und sind dadurch kompensiert, dass die Gesamthelligkeit oder Farbdichte der Superzelle von Primärbild und mit Sekundärbild überlagertem Primärbild gleich sind, obwohl Einzeldruckpunkte oder Bildelemente der Element-Gruppe in vorbestimmter Art verändert sind.

Bei den analogen Verfahren wird je nach verwendetem Einbringungsverfahren eine andere Kunststofflinse verwendet, was dazu führt, dass (z.B. an einer Grenzkontrollstelle) bei der Kontrolle von Personaldokumenten mit steganographischen Daten für Dokumente aus verschiedenen Ländern die jeweiligen Linsen verfügbar sein müssen. Die Auswertung ist dennoch zeitaufwendig, da sie in jedem Fall manuell vorgenommen werden muss.

Der Scanvorgang bei digitalen Verfahren erfordert an der Kontrollstelle in der Regel einen Rechner (z.B. PC) mit Flachbettscanner und einer speziellen Auswertesoftware. Außerdem ist zusätzlich zu den sonstigen Prüfverfahren (z.B. Hologramme, Kinegramme etc.) stets ein separater Scanvorgang erforderlich, der die Kontrolldauer für ein Dokument erheblich verlängert und somit diese Hochsicherheitsprüfung für Grenzkontrollen zu zeitintensiv und höchstens bei bestehendem Anfangsverdacht einer Dokumentenfälschung oder als Stichprobenkontrolle einsetzbar ist.

Derzeit auf dem Markt befindliche Dokumentenlese- und Prüfgeräte erreichen bisher nicht die erforderliche Auflösung von mindestens 500 dpi oder benötigen aufgrund der zeilenweisen Abtastung einfach zu viel Zeit für eine Standardkontrolle. Außerdem unterliegen mechanische Scanvorrichtungen einem technischen Verschleiß, durch den sich Wartungsaufwand und Unterhaltungskosten erhöhen.

Der Erfindung liegt die Aufgabe zugrunde, eine neue Möglichkeit zur Bildaufnahme für eine Datenerfassung und eine Echtheitsprüfung von Dokumenten zu finden, die in kürzester Zeit und mit geringem gerätetechnischem Aufwand eine automatisierte Ermittlung des Vorhandenseins und eine hoch aufgelöste Aufnahme von versteckten Informationen zur Hochsicherheitsprüfung gestattet. Eine erweiterte Aufgabe besteht darin, ohne Bewegung von mechanischen Teilen oder des geprüften Dokuments Schrift-, Bilddaten und/oder versteckte Information optisch so auszulesen, dass auch alle anderen Sicherheitsmerkmale mit derselben Prüfeinrichtung geprüft werden können.

Erfindungsgemäß wird die Aufgabe bei einem Verfahren zur Bildaufnahme für die Datenerfassung und Sicherheitsprüfung von Dokumenten, bei dem ein zu prüfendes Dokument mittels einer Bildaufnahmeeinheit zweidimensional abgetastet wird, insbesondere zur automatisierten Prüfung der Echtheit von Dokumenten, in denen versteckte Informationen zur Sicherheitsprüfung eingearbeitet sind, gelöst durch die folgende Schrittfolge:

- Aufnahme eines Gesamtbildes des Dokuments mit relativ geringer Bildauflösung, wobei die Auflösung wenigstens so groß gewählt wird, dass aus dem aufgenommenen Bild ein Dokumententyp bestimmt werden kann,
- Ermittlung des Dokumententyps und Zuordnung gespeicherter Sicherheitsmerkmale zum erkannten Dokumententyp,
- Prüfung, ob der erkannte Dokumententyp ein definiertes Sicherheitsmerkmal aufweist, für dass eine höhere Bildauflösung, die erheblich größer als die Bildauflösung bei der Aufnahme des Gesamtbildes sein muss,
- Umschalten der Bildaufnahmeeinheit auf die höhere Bildauflösung und auf eine eingeschränkte Bildaufnahme in einem interessierenden Bereich des Dokuments, falls das Dokument einen solchen Bereich mit definiertem Sicherheitsmerkmal enthält,

- Aufnahme eines hochaufgelösten Teilbildes vom interessierenden Bereich und Auswertung des aufgenommenen Teilbildes, falls das Sicherheitsmerkmal vorhanden ist,
- Prüfung der Echtheit des Dokuments durch Vergleich der ermittelten Dokumentendaten mit Daten einer Datenbank oder mit Daten des vorliegenden Dokuments (z.B. Name oder Geburtsdatum des Ausweisinhabers etc), die entsprechend dem Dokumententyp an bestimmten Positionen zu erwarten sind.

Vorteilhaft wird zur Aufnahme des Gesamtbildes eines Personaldokuments eine Bildauflösung von ca. 250 dpi verwendet.

Als interessierender Bereich wird zweckmäßig ein Teilbild des Dokuments mit Hochsicherheitsmerkmalen aus versteckten Informationen bei höherer Bildauflösung ausgelesen. Dabei wird bei Personaldokumenten vorzugsweise das Passbild als Teilbild (interessierender Bereich mit versteckter Information) ausgelesen.

Soll bei einem Personaldokument ein interessierender Bereich mit einem Hochsicherheitsmerkmal als Teilbild des Dokuments ausgelesen werden, wird vorteilhaft eine Bildauflösung von mindestens 500 dpi angewendet.

Nach Ermittlung des Dokumententyps anhand des ersten Gesamtbildes kann vorteilhaft eine Reihenfolge von unterschiedlichen Bildaufnahmen, vorzugsweise UV-, IR-Aufnahmen, Hologramm- oder Beugungsaufnahmen sowie hochaufgelösten Aufnahmen für Hochsicherheitsmerkmale, festgelegt werden.

Die Reihenfolge von unterschiedlichen Bildaufnahmen wird zweckmäßig in Abhängigkeit von der Vertrauenswürdigkeit der vorhandenen Sicherheitsmerkmale des Dokumententyps festgelegt. Die Reihenfolge kann aber auch in Abhängigkeit vom Auswerteaufwand der einzelnen Bildaufnahmen festgelegt werden. Falls in einem ermittelten Dokumententyp keine verstecken Informationen für eine Hochsicherheitsprüfung vorhanden sind, wird eine gesonderte hochaufgelöste Teilbildaufnahme nicht durchgeführt.

Des Weiteren wird die Aufgabe der Erfindung bei einer Anordnung zur Bildaufnahme für die Datenerfassung und Sicherheitsprüfung von Dokumenten, bei dem eine Bildaufnahmeeinheit zur zweidimensionalen Abtastung eines zu prüfenden Dokuments vorhanden ist, insbesondere zur automatisierten Prüfung der Echtheit von Dokumenten, in denen spezielle Sicherheitsmerkmale eingearbeitet sind, dadurch gekennzeichnet, dass die Bildaufnahmeeinheit einen zweidimensionalen Bildsensor aufweist und auf das zu prüfende Dokument gerichtet ist, dass der Bildsensor mindestens für eine erste Bildaufnahme über der Auflagefläche so angeordnet ist, um ein Gesamtbild des Dokuments formatfüllend auf dem Bildsensor abzubilden und mit relativ niedriger Auflösung auszulesen, dass eine Kamerasteuereinheit zur Umschaltung der Bildaufnahmeeinheit von einem Gesamtbild- in einen Teilbild-Aufnahmemodus mit dem Bildsensor verbunden ist, um neben der üblichen Steuerung der Bildsensorauslesung ein Teilbild von einem eingeschränkten interessierenden Bereich des Dokuments für die Auswertung von speziellen Sicherheitsmerkmalen mit höherer Bildauflösung aufzunehmen, und dass eine Auswerteeinheit der Bildaufnahmeeinheit nachgeordnet ist, die Mittel zur Bestimmung des Dokumententyps aus mindestens einem Gesamtbild des Dokuments aufweist, wobei die Kamerasteuereinheit in Abhängigkeit vom ermittelten Dokumententyp beeinflussbar ist zur Einstellung der Bildaufnahmeeinheit für die hochaufgelöste Bildauslesung eines Teilbildes vom interessierenden Bereich des Dokuments.

Für die Umschaltung zwischen den Aufnahmen von Gesamtbild und Teilbild weist die Bildsensoreinheit vorteilhaft ein hochauflösenden Aufnahmeobjektiv und einen Bildsensor mit sehr hoher Pixelzahl und variabler Auslesesteuerung auf, wobei der Bildsensor zur Aufnahme des Gesamtbildes mit reduzierter Auflösung auslesbar ist, indem definierte Zeilen und Spalten übersprungen werden, und zur Aufnahme des Teilbildes mit höherer Auflösung nur ein Pixelbereich des Bildsensors, auf den der interessierende Bereich des Dokuments abgebildet ist, auslesbar ist.

Zweckmäßig sind in der Auswerteeinheit Speichermittel vorhanden, aus denen nach der Ermittlung des Dokumententyps Art und Position der speziellen Sicherheitsmerkmale abrufbar sind, um den auszulesenden Pixelbereich des Bildsensors zu programmieren.

In einer weiteren vorteilhaften Variante der Umschaltung zwischen den Aufnahmen von Gesamtbild und Teilbild weist die Bildsensoreinheit ein hochauflösendes Aufnahmeobjektiv und einen Bildsensor mit für die Aufnahme des Gesamtbildes ausreichender Pixelzahl und variabler Auslesesteuerung sowie einem Mikroscansystem auf, wobei zur Aufnahme des hochaufgelösten Teilbildes der Bildsensor in einem Scanmuster zur Zwischenpixelabtastung verschiebbar ist, so dass zusätzlich zur Abtastposition des Gesamtbildes Verschiebungen um Bruchteile des Pixelabstandes in Zeilen- und Spaltenrichtung ausgeführt werden, und nur ein Pixelbereich des Bildsensors, auf den der interessierende Bereich des Dokuments abgebildet ist, ausgelesen wird.

Vorzugsweise ist der Bildsensor zur Ausführung des Mikroscans auf einem piezoelektrischen Tischsystem aufgebracht. Dabei ist es für die meisten Aufnahmen von Dokumenten mit Hochsicherheitsmerkmalen ausreichend, dass der Bildsensor in einem 2x2-Scanmuster bewegbar ist.

Der interessierende Bereich eines Dokuments weist vorteilhaft analoge oder digitale Hochsicherheitsmerkmale mit versteckten Informationen auf, wobei als interessierender Bereich auf einem Personaldokument vorzugsweise spezielle Daten des Dokuments zur Fälschungssicherung in das Passbild steganographisch integriert sind.

In einer dritten Ausführungsvariante für die Umschaltung zwischen den Aufnahmen von Gesamtbild und Teilbild weist die Bildsensoreinheit vorteilhaft eine Kamera mit einem Zoomobjektiv und einem Bildsensor mit mittlerer Pixelzahl auf und ist zur Umschaltung von der Aufnahme des Gesamtbildes zur Aufnahme des Teilbildes parallel zur Auflagefläche des Dokuments verschiebbar angeordnet, wobei die Kamera für die Aufnahme des Teilbildes mittig über dem interessierenden Bereich des Dokuments positioniert ist und der interessierende Bereich des Dokuments durch Hineinzoomen mit dem Aufnahmeobjektiv formatfüllend und infolgedessen mit höherer Bildauflösung auf den Bildsensor abgebildet wird. Dabei ist die Kamera vorzugsweise mittels einer x-y-Führung parallel zur Auflagefläche des Dokuments verschiebbar.

Zweckmäßig wird die Kamera beim Umschalten zur Aufnahme des Teilbildes zusätzlich um 90° gegenüber der Lage bei der Aufnahme des Gesamtbildes gedreht, um die Rechteckform des Bildsensors besser an ein Hochformat eines Passbildes als interessierenden Bereich gegenüber einem Querformat des Gesamtbildes des Dokuments anzupassen.

In einer vierten Gestaltungsform für die Umschaltung zwischen den Aufnahmen von Gesamtbild und Teilbild weist die Bildsensoreinheit vorteilhaft eine Kamera mit einem Zoomobjektiv und einem Bildsensor mit mittlerer Pixelzahl auf und zur Umschaltung von Gesamtbild zu Teilbild ist zweckmäßig eine Spiegelanordnung aus Umlenkspiegel und Klappspiegel vorhanden, wobei die Kamera für die Aufnahme des Teilbildes unverschiebbar über dem Dokument positioniert ist und der interessierende Bereich des Dokuments durch Einschwenken des Klappspiegels und durch Hineinzoomen mit dem Aufnahmeobjektiv in den über den Klappspiegel und Umlenkspiegel räumlich versetzten Abbildungsstrahlengang formatfüllend und infolgedessen mit höherer Bildauflösung auf den Bildsensor abgebildet wird.

Eine fünfte Gestaltung der erfindungsgemäßen Anordnung für die Umschaltung zwischen den Aufnahmen von Gesamtbild und Teilbild die Bildsensoreinheit verwendet zweckmäßig eine Kamera mit einem Zoomobjektiv und mit einem Bildsensor mittlerer Pixelzahl sowie eine Spiegelanordnung aus Umlenkspiegel und halbdurchlässigem Spiegel zur Umschaltung von der Aufnahme des Gesamtbildes zur Aufnahme des Teilbildes, wobei die Kamera für die Aufnahme des Teilbildes unverschiebbar über dem Dokument positioniert ist und der interessierende Bereich des Dokuments durch Aktivieren des Umlenkspiegels und durch Hineinzoomen mit dem Aufnahmeobjektiv in den über halbdurchlässigen Spiegel und Umlenkspiegel räumlich versetzten Abbildungsstrahlengang formatfüllend und infolgedessen mit höherer Bildauflösung auf den Bildsensor abgebildet wird. Dabei wird für die Aufnahme des Teilbildes wiederum die Kamera zusätzlich um 90° gegenüber der Lage für die Aufnahme des Gesamtbildes gedreht, um eine Rechteckform des Bildsensors besser an ein Hochformat eines Passbildes als interessierenden Bereich gegenüber einem Querformat des Gesamtbildes des Dokuments anzupassen.

Der Umlenkspiegel ist vorteilhaft mit einer den Reflexionsgrad steuernden Schicht, vorzugsweise mit einer Flüssigkristallschicht, überzogen. Er kann aber auch als Kippspiegel ausgebildet sein, um den Abbildungsstrahlengang vom interessierenden Bereich des Dokuments nur für die Aufnahme des Teilbildes auf den halbdurchlässigen Spiegel zu übertragen und für das Gesamtbild des Dokuments auszublenden.

In einer sechsten Variante der Erfindung werden für die Umschaltung zwischen den Aufnahmen von Gesamtbild und Teilbild als Bildsensoreinheit vorteilhaft eine erste und eine zweite Kamera mit je einem Bildsensor mittlerer Pixelzahl und unterschiedlichen Aufnahmeobjektiven eingesetzt, wobei die erste Kamera zur Aufnahme des Gesamtbildes starr und mittig über dem Dokument angeordnet ist, die zweite Kamera zur Aufnahme des Teilbildes mittig über dem interessierenden Bereich des Dokuments angeordnet ist und die Kamerasteuerung Mittel zur Umschaltung zwischen der Auslesung der ersten und der zweiten Kamera aufweist.

Zweckmäßig weisen die erste und die zweite Kamera Bildsensoren mit gleicher Pixelzahl auf. Dabei ist die zweite Kamera für die Aufnahme des Teilbildes gegenüber der Lage der ersten Kamera für die Aufnahme des Gesamtbildes sinnvollerweise um 90° gedreht angeordnet, um eine Rechteckform des Bildsensors besser an das Hochformat eines Passbildes als interessierenden Bereich im Teilbild und dem Querformat des Dokuments im Gesamtbild anzupassen.

Die Grundidee der Erfindung geht von der Überlegung aus, dass für das Auslesen von steganographischen Informationen im Hochsicherheitsverfahren eine Auflösung von mindestens 500 dpi gefordert wird, woraus sich bei einer für Personaldokumente maximal zu erfassenden Fläche von 130 x 90 mm$^2$ die Forderung nach minimal 2560 x 1770 Pixeln des Bildsensors ergibt. Für das Auslesen der visuell sichtbaren Daten und Bildinformationen des Dokumentes ist lediglich eine Auflösung von ca. 250 dpi notwendig, so dass bei einem Bildsensor mit 1280 x 885 Pixel nur 25 % der Datenmenge gegenüber der hochauflösenden Steganographie-Abtastung erfasst und verarbeitet werden müssen. Eine generelle Erhöhung der Auflösung wäre somit vor allem aus Gründen des erhöhten Zeitaufwandes für den umfangreicheren Datentransfer und die längere Auswertedauer nicht vertretbar. Deshalb wird nach der Erfindung innerhalb eines einheitlichen Dokumentenlese- und Prüfgerätes zunächst ein Bild des Dokumentes mit der für die Erkennung der visuellen Daten und Bildinformationen ausreichenden niedrigen Auflösung aufgenommen und nach der Identifizierung des Dokumententyps mit der Kenntnis des entsprechenden Bereiches, der steganographische Informationen enthält, nur dieser Bildausschnitt mit einer hohen Auflösung (> 500 dpi) erfasst. Durch die Bereichsbegrenzung erhöht sich trotz höchster Auflösung die zu verarbeitende Datenmenge nicht und macht deshalb keine höheren Aufwände für Datentransfer und -verarbeitung erforderlich. Außerdem können nach Identifizierung des Dokumententyps noch weitere Bilder des gesamten Dokumentes für die Überprüfung von anderen Sicherheitsmerkmalen (z.B. für IR- und UV- Bildaufnahmen mit angepasster niedriger Auflösung und/oder mit höherer Auflösung bei Bereichsbeschränkung) erfasst werden.

Zur Realisierung der Grundmethode sind unterschiedlich Ausführungsvarianten geeignet.

Einerseits wird unter Verwendung einer Kamera mit hochauflösendem Bildsensor (mindestens 2560 x 1770 Pixel) und variabel einstellbaren Ausleseregime (Überspringen von Spalten und Zeilen sowie wählbaren Bildausschnitten) ein Gesamtbild des Dokumentes aufgenommen, indem Zeilen und/oder Spalten im Ausleseprozess übersprungen werden, um durch geringere, jedoch für die Dokumentenerkennung ausreichende Auflösung eine Datenreduktion und eine schnelle Bestimmung des Dokumententyps zu ermöglichen. Aus der Kenntnis des Dokumententyps wird dann der eingeschränkte Bereich des Dokuments mit versteckter Information als sogenannter WOI-Bereich (Window of Interest) mit höchster Auflösung des Bildsensors ausgelesen und die steganographische Information ausgewertet, ohne das erheblich größere Datenmengen zu verarbeiten sind. Eine davon abgeleitete Variante arbeitet mit einem niedriger auflösenden Bildsensor, der jedoch mittels eines zuschaltbaren Mikroscansystems die höhere Auflösung für den interessierenden Bereich des Dokuments erreicht und auf die Auslesung des interessierenden Pixelbereichs des Bildsensors begrenzt werden kann.

Andererseits können für kostengünstigere Varianten kommerziell verfügbare Kameras mit geringeren Pixelzahlen (z.B. ab 1,3 Megapixel) eingesetzt werden, wobei zur Aufnahme unterschiedlich hoch aufgelöster Gesamt- und Teilbilder des Dokuments die optische Abbildung unterschiedlich vergrößert und örtlich verschoben realisiert wird.

Eine dabei mögliche Vorzugsvariante verwendet anstelle einer mechanisch bewegten Kamera zwei geeignet installierte Kameras (mit je min. 1,3 Megapixel), von denen eine das gesamte Dokument erfasst und die zweite vom Bereich der steganographischen Information ein vergrößertes, hochaufgelöstes Teilbild des Dokuments aufnimmt. Wegen fehlender mechanisch bewegter Komponenten weist diese Variante deutliche Zeitvorteile auf und ist dazu noch kostengünstiger als die Anordnung mit einer hochauflösenden Kamera (ca. 5 Megapixel).

Mit der Erfindung ist es möglich, versteckte (steganographische) Informationen von Dokumenten zu erfassen, wobei in kürzester Zeit und mit geringem gerätetechnischem Aufwand eine automatisierte Ermittlung des Vorhandenseins und eine hoch aufgelöste Aufnahme von versteckten Informationen zur Hochsicherheitsprüfung möglich ist. Vorteilhafte Ausgestaltungen gestatten es weiterhin, ohne Bewegung von mechanischen Teilen oder des geprüften Dokuments Schrift-, Bilddaten und/oder versteckte Information optisch so auszulesen, dass auch alle anderen Sicherheitsmerkmale mit derselben Prüfeinrichtung geprüft werden können.

Ferner werden mit der erfindungsgemäßen Lösung die Nachteile von separaten Flachbettscannern (mit zusätzlichem Zeitaufwand für die hochaufgelöste Abtastung steganographischer Information) und die daraus resultierenden langen Abtastzeiten für die Erfassung der Gesamtheit der Daten eines Dokumentes (visuelle Text- und Bilddaten, Hologramme, Kinegramme sowie Steganogramme) preiswert überwunden.

Die Erfindung soll nachstehend anhand von Ausführungsbeispielen näher erläutert werden. Die Zeichnungen zeigen:

Fig.1: ein prinzipielles Ablaufschema des erfindungsgemäßen Verfahrens für eine Dokumentenprüfung zur Erkennung und hochaufgelösten Aufnahme von versteckten (steganographischen) Informationen mit gleichzeitiger Aufnahme von üblicher Text- und Bildinformation des Dokuments,

Fig. 2: eine stilisierte Ansicht eines Personaldokuments als Gesamtbild und mit Kennzeichnung eines interessierenden Bereichs in Form des Passbildes,

Fig. 3: eine erfindungsgemäße Anordnung mit einer Kamera, die einen hochauflösenden Bildsensor mit variabler Auslesesteuerung (WOI - Windows of Interest) aufweist und trotz des erhöhten Auslösungsvermögens des Bildsensors eine Datenreduktion ermöglicht,

Fig.4: eine zu Fig. 3 gleichwertige Variante, bei der die Kamera einen geringer auflösenden Bildsensor aufweist, der jedoch für die Aufnahme des Teilbildes des Dokuments einen Mikroscan (2x2) ausführen und die Auslesung auf einen WOI-Bereich beschränken kann,

Fig. 5: eine Ausgestaltung der Erfindung zur Aufnahme eines Gesamtbildes des Dokuments sowie eines Teilbildes eines Steganographie-Bereichs mittels einer parallel zur Dokumentenauflagefläche verschiebbaren Zoomkamera,

Fig. 6: eine Ausgestaltung der Erfindung mit einer festen Zoomkamera sowie einem festen und einem Klappspiegel zur Umschaltung des Gesichtfeldes der Kamera,

Fig. 7: eine Ausgestaltung der Erfindung mit einer festen Zoomkamera sowie einem festen und einem halbdurchlässigen Spiegel zur Umschaltung des Gesichtfeldes der Kamera,

Fig. 8: eine Ausgestaltung der Erfindung mit zwei geeignet installierten, gleichwertigen Kameras, von denen eine das Gesamtbild und die andere optisch vergrößert den Steganographie-Bereich aufnimmt,

Im folgenden soll - ohne Beschränkung der Allgemeinheit - angenommen werden, dass es sich bei dem zu prüfenden Dokument 1 um ein Personaldokument handelt, für das die versteckte (steganographische) Information im Passbild 11 untergebracht ist.

Da es insbesondere der erklärte Wunsch von Grenzkontrollorganen ist, dass möglichst durch einmaliges Auflegen eines Dokuments 1 auf ein Dokumentenlese- und -prüfgerät Bild- und Textdatenerfassung und alle Sicherheitsprüfungen ablaufen sollen, muss die Bildaufnahmeeinheit 2 den Konflikt zwischen möglichst kurzer Abtastzeit und hoher Abtastdichte (> 500 dpi), die für die Auswertung von versteckten Informationen 12 im Dokument 1 mindestens erforderlich ist, lösen.

Für das Auslesen von steganographischen Daten für Hochsicherheitsprüfungen von Dokumenten 1 wird eine Auflösung von mindestens 500 dpi gefordert. Daraus ergibt sich bei einer maximal zu erfassenden Fläche von 130 x 90 mm$^2$ für Personaldokumente eine minimal geforderte Anzahl von 2560 x 1770 Bildpunkten (4,6 Megapixel).

Für das Auslesen der (visuellen) Bild- und Textinformation eines Dokuments 1 ist aber nur eine Auflösung von ca. 250 dpi notwendig, so dass bei dafür ausreichenden 1280 x 885 Bildpunkten nur 25 % der Daten gegenüber einer hochauflösenden Abtastung für Hochsicherheitsprüfungen erfasst und verarbeitet werden müssen.

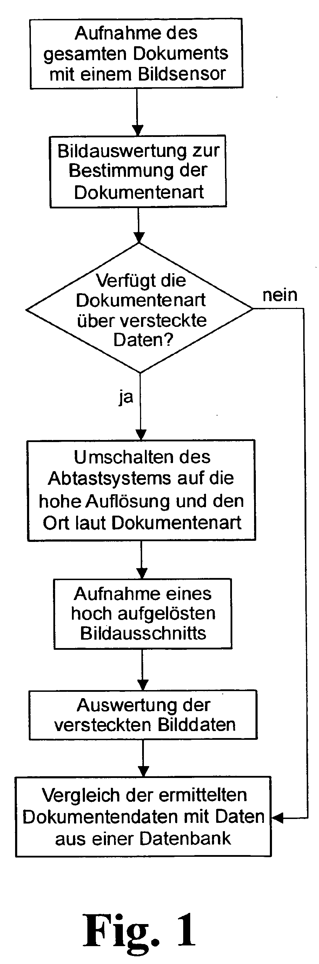

Deshalb wird gemäß der Erfindung das folgende Verfahren zum Erfassen versteckter Information in Dokumenten 1 angewendet, dessen Prinzip in Fig. 1 als Ablaufschema dargestellt ist.

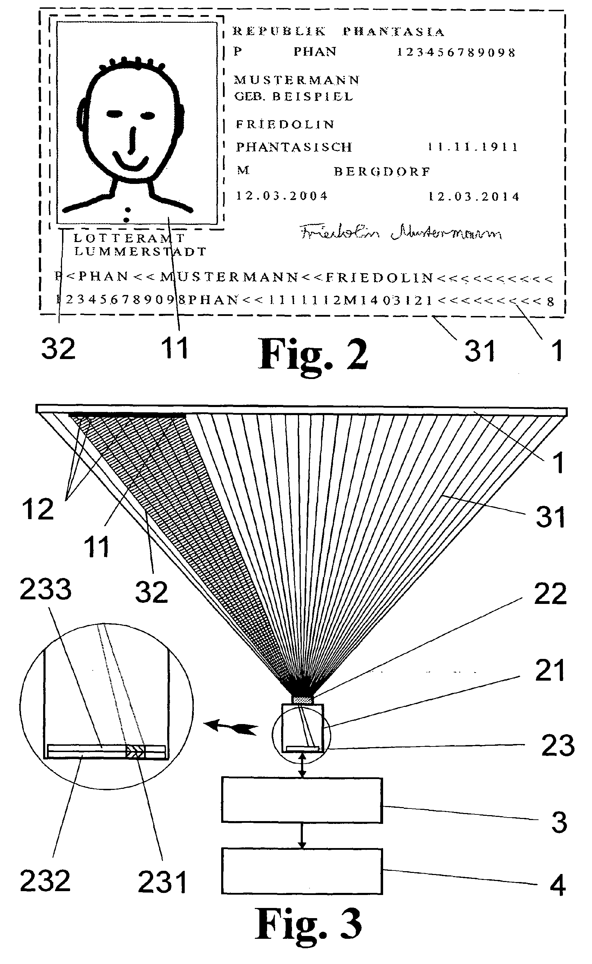

In einem ersten Schritt wird mit einer relativ geringen Auflösung vom vorgelegten Dokument 1 ein Gesamtbild 31 (siehe Fig. 2) aufgenommen, das nur die notwendige Bildpunktzahl (ca. 250 dpi) aufweist, indem eine optische Abbildung des kompletten Dokuments 1 mittels eines geeigneten Objektivs 22 bzw. 24 auf den Bildsensor 23 der Kamera 21 (nur in den Fig. 3 ff. dargestellt).

Aus diesem Gesamtbild 31 wird in einem zweiten Schritt im Zuge der üblichen Text- und Bilddatenauswertung und -speicherung eine Bestimmung des Dokumententyps vorgenommen (z.B. deutscher Personalausweis, indisches Einreise-Visum, französischer EU-Reisepass etc.). In diesem Schritt oder als nebengeordnete Teilschritte können weitere Sicherheitsprüfungen vorgenommen werden, wie zum Beispiel UV- und IR-Aufnahmen des Dokuments 1 und Prüfung von Hologramme sowie Kinegramme, soweit solche Prüfgeräte keinen Laser verwenden (wie z.B. die nicht vorveröffentlichte DE 10 2004 020 661.9).

Aus dem ermittelten Dokumententyp resultiert eine Speicherabfrage (Abruf von Prüfmerkmalen aus einer Dokumententypliste), ob der (bekannte) Dokumententyp steganographische Informationen 12 aufweist oder nicht.

In letzterem Fall wird die Prüfung ohne hochaufgelöste Teilbildaufnahme beendet und die bereits ausgelesenen Dokumentendaten werden mit denen aus einer Datenbank verglichen.

Weist der erkannte Dokumententyp versteckte Informationen 12 auf, sind aus den gespeicherten Typenlisten für Dokumente 1 auch die Position und die Art der versteckten Information 12 entnehmbar.

Mit der Kenntnis der Position wird als vierter Schritt das Abtastsystem 2 auf eine hochauflösende Bildaufnahme des interessierenden Bereichs, der im Fall von Personaldokumenten mindestens das Passbild 11 betrifft, umgeschaltet. Die Umschaltung beinhaltet eine Maßnahme aus einer Vielzahl von Möglichkeiten, den interessierenden Bereich des Passbildes 11 mit einer wesentlich höheren Abtastdichte, d.h. mit mehr Pixel pro Flächeneinheit des Dokuments 1, aufzunehmen. Erforderlich ist mindestens die doppelte Auflösung (> 500 dpi), da eine solche Auflösung notwendig ist, um Kodierungsmaßnahmen im Druckraster des Passbildes 11 erkennen zu können, wie sie z.B. im oben zitierten EP 1 345 193 A2 des Standes der Technik beschrieben sind.

In einem fünften Schritt, auf den hier - wegen der Vielfalt der Kodierungsmöglichkeiten - nicht näher eingegangen werden kann, erfolgt dann eine Auswertung der steganographischen Information 12, anhand der erkennbar ist, ob die versteckten Daten mit den übrigen ausgelesenen Daten des Dokuments 1 zusammenpassen oder nicht. Zusätzlich kann dann im Wege des Vergleichs aller Daten des geprüften Dokuments 1 mit Daten aus einer externen Datenbank eine weitere Prüfung der Echtheit des Dokuments 1 erfolgen.

Da im Grenzverkehr die Zeit für die Abfertigung eines einzelnen Passagiers eine kritische Größe ist, wird gemäß der Erfindung also sichergestellt, dass ein durch Hochsicherheitsprüfung ergänztes Passlese- und Prüfgerät nur die Bilder eines Dokumentes 1 aufnimmt und verarbeitet, die für das gerade zu prüfende Dokument 1 notwendig sind.

Um dies zu gewährleisten, ist jeweils mit derselben Aufnahmesteuerung zu arbeiten, die jedoch nach Belieben durch zusätzliche Prüfschritte mit Bildauslesung ergänzt sein kann, solange diese für den erkannten Dokumententyp sinnvoll bzw. vorgeschrieben sind.

Kern der Aufnahmesteuerung ist somit, wie Ablaufplan von Fig. 1 aufgezeigt, die Aufnahme und Auswertung einer niedrig aufgelösten Bildaufnahme (ca. 250 dpi), aus der zur Festlegung aller folgenden Auslese- und Prüfschritte, bestimmt wird, um welche Dokumentart (z.B. Reisepass welchen Staates) es sich beim zu prüfenden Dokument 1 handelt. Aufgrund dieser Erstauswertung werden dann erst die zur Prüfung von Sicherheitsmerkmalen eines Dokumententyps vorgeschriebenen Bildaufnahmen, inklusive oder exklusive eines Bereichs mit steganographischer Information 12, festgelegt. Abgeleitet von der ermittelten Dokumentenart wird auch die Reihenfolge der Auslese- und Prüfschritte festgelegt und - möglicherweise unter Beachtung von (weiteren) Zwischenergebnissen - abgearbeitet oder gegebenenfalls vorzeitig beendet.

Somit werden Passlese- und Prüfgeräte im Grenzverkehr auch unter Verwendung eines Hochsicherheitsprüfverfahrens gemäß der Erfindung nicht den zur Dokumentenkontrolle einzuhaltenden Zeitrahmen sprengen.

Zur Realisierung dieser Grundmethode sind unterschiedliche Ausführungsvarianten geeignet.

In der Vorrichtung gemäß Fig. 3 wird eine Kamera 21, die einen geeigneten hochauflösenden Bildsensor 23 (mindestens 2560 x 1770 Pixel mit variabler Auslesesteuerung, WOI- oder Overclocking-Modus) aufweist, kombiniert mit einem geeigneten Aufnahmeobjektiv 22 (geeignetes Normalobjektiv oder Weitwinkelobjektiv), verwendet. Bei den einsetzbaren Bildsensoren 23 wird die Eigenschaft der variablen Auslesesteuerung je nach Hersteller unterschiedlich benannt. In der CMOS-Technologie wird diese Applikation "Window of Interest" (WOI) bzw. "Region of Interest" (ROI), "Active Window" und "Windowing" genannt. In der CCD-Technologie haben sich die Begriffe "Fast Dump" für das Überspringen von Zeilen und "Overclocking" für das Übertakten der nicht benötigten Spalten etabliert. Die Wirkungsweise ist in allen Fällen sehr ähnlich, wobei es gegenüber der vollständiger Auslesung des Bildsensors 23 (Vollbildrate < 20 Bilder/Sekunde) zu einer wesentlichen Datenreduktion (ca. 1/4 - 1/16) und zu einer erheblichen Erhöhung (mindestens Verdopplung) der Bildrate kommt.

Zunächst wird über das Objektiv 22 von der Kamera 21 mit dem oben beschriebenen hochauflösenden Bildsensor 23 ein Gesamtbild 31 des Dokumentes 1 aufgenommen. Eine Kamerasteuereinheit 3 sorgt dabei dafür, dass das Dokument 1 nur mit einer für Dokumentenidentifikation (Bild- und Textdatenerfassung) notwendigen Auflösung abgetastet wird, d.h. je nach erforderlicher Auflösung wird bei dem oben genannten hochauflösenden Bildsensor 23 nur jede zweite, dritte oder vierte Zeile und/oder Spalte des Bildsensors 23 ausgelesen und an die Auswerteeinheit 4 zur Bestimmung des Dokumententyps übertragen. Die übrigen Zeilen und/oder Spalten werden übersprungen, so dass nur ein Teil der verfügbaren Pixel des Bildsensors 23 das Gesamtbild 31 des Dokuments 1 ausmacht, wie es in Fig. 3 durch die gerasterte Seitenansicht des Bildfeldes der Kamera 21 symbolisiert ist, und als reduzierter Bilddatensatz an die Auswerteeinheit 4 transferiert wird.

Nach der Identifizierung des Dokumententyps durch die Auswerteeinheit 4 können (vorzugsweise vor der steganographischen Auswertung) noch weitere Bilder des gesamten Dokumentes 1 mit einer je nach Bedarf vorwählbaren Auflösung für die Überprüfung von weiteren Sicherheitsmerkmalen, z.B. Aufnahme bei infrarotem oder ultraviolettem Licht (nicht gezeichnet) - gegebenenfalls auch mit reduzierter Auflösung, erfasst werden. Eine solche Ablaufsteuerung obliegt wiederum der Kamerasteuereinheit 3.

Nachdem alle Gesamtaufnahmen vom Dokument 1 durch Auslesen des hochauflösenden Bildsensors 23 mit reduzierter Auflösung (durch Überspringen von Spalten und Zeilen) gemacht wurden, sind neben der notwendigen Ermittlung des Dokumententyps auch die einfachen (visuellen) Sicherheitsmerkmale des Dokuments 1 geprüft, so dass bei gewünschter oder vorgeschriebener Hochsicherheitsprüfung zur hochaufgelösten Erfassung eines Bereiches des Dokuments 1, in dem sich steganographische Informationen 12 befinden (falls der vorliegende Dokumententyp solche aufweisen muss), übergegangen werden kann.

Die Bereiche im Dokument 1, die steganographische Informationen 12 enthalten, sind für jeden zu prüfenden Dokumententyp bekannt. Für die meisten Personaldokumente und Visa ist dieser Bereich das Passbild 11, das bei allen Dokumenten 1 nach ICAO-Standard nahe der linken oberen Ecke des Dokuments 1 angeordnet ist (siehe Fig. 2).

Mit der Kenntnis des Dokumententyps kann dieser eingeschränkte Bereich (das Passbild 11 des Dokuments 1 mit versteckter Information 12) mit höchster Auflösung aufgenommen und ausgewertet werden, ohne dass erheblich größere Datenmengen zu verarbeiten wären.

Eine vergrößerte stilisierte Detaildarstellung des Bildsensors 23 ist in Fig. 3 in Form eines Kreises zur Veranschaulichung der Steuerung der hochauflösenden Teilbildaufnahme 32 angegeben.

Aufgrund des ermittelten Dokumententyps wird entsprechend der Lage des Bereiches mit steganographischen Informationen 12 (hier: des Passbildes 11 eines Dokuments 1) durch die Kamerasteuereinheit 3 ein Auslesebereich (WOI-Bereich) 231 im Register 232 des Bildsensors 23 so einprogrammiert, dass nur der interessierende Bildausschnitt 233 des Passbildes 11 des Dokuments 1 mit der vollen Auflösung des Bildsensors 23 ausgelesen und an die Auswerteeinheit 4 übertragen.

Mit dieser Art der Erfassung des Dokumentes 1 und der Einschränkung der hochauflösenden Bildaufnahme auf den Bereich des Passbildes 11 (mit den steganographischen Informationen 12) werden Übertragungszeiten (vom Bildsensor 23 zur Auswerteeinheit 4) und Anforderungen an die Auswerteeinheit 4 (aufgrund reduzierter Datenmengen) gering gehalten.

Die Lösung kommt außerdem ohne jedes bewegte Teil aus und ist ohne räumliche Lagebeschränkung des Steganogramms an jeden Dokumententyp anpassbar.

Die derzeit noch hohen Preise für Flächensensoren mit ausreichender Pixelzahl (ca. 5 Megapixel oder größer) und mit einer variablen Einstellbarkeit von Auflösung und Bildausschnitten (WOI - Windows of Interest) sowie die hohen Anforderungen an die Abbildungsoptik (insbesondere der Modulationsübertragungsfunktion - MTF), die damit ebenfalls teurer ist, beschränken vorerst noch den durchgängigen Einsatz dieser Lösung in Grenzkontrollpunkten.

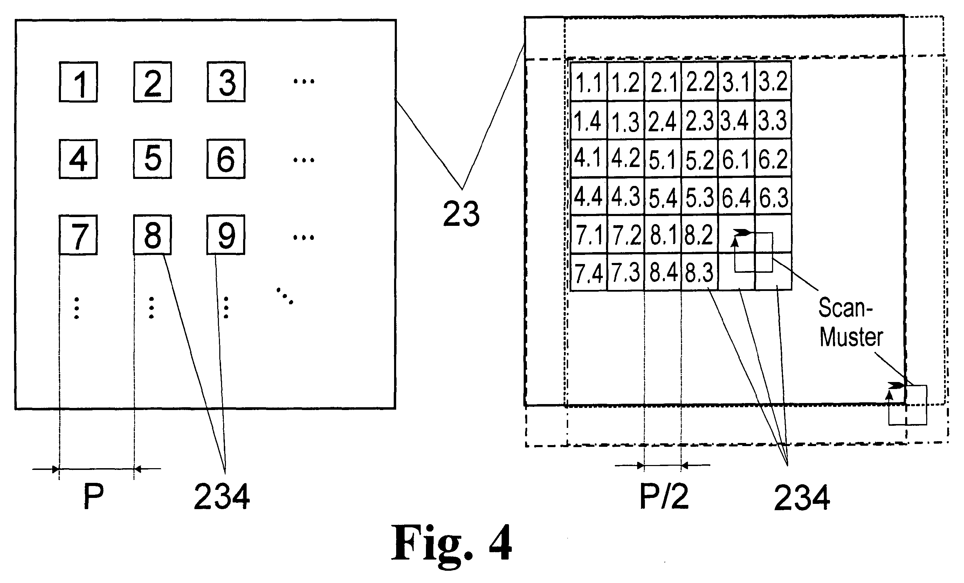

Deshalb wird eine an Fig. 3 angelehnte Variante der Erfindung beschrieben, die anstelle des hochauflösenden Bildsensors 23 mit einem preiswerteren geringer auflösenden Bildsensor 23 (250 dpi) auskommt, jedoch über ein sogenanntes Mikroscansystem verfügt, das eine Subpixelabtastung des Bildfeldes erlaubt, wenn zur Auswertung steganographische Informationen die Aufnahme eines Teilbildes 32 erforderlich ist. Das Prinzip dieser Sensorumschaltung ist in Fig. 4 schematisch gezeigt, wobei die linke Darstellung die für die Aufnahme des Gesamtbildes 31 wirksamen Pixelpositionen (d.h. das Raster der lichtempfindlichen Elemente) des Bildsensors 23 zeigt, während in der rechten Darstellung der Abtastmodus für die hochaufgelöste Aufnahme des Teilbildes 32 zu sehen ist. Im Teilbildmodus wird also der gesamte Bildsensor 23, vorzugsweise mit einem piezoelektrisch betriebenen Tischsystem (nicht dargestellt), in einer Schrittfolge bewegt, die es gestattet, die Abbildung des vorgelegten Dokuments 1 - trotz geringer Pixeldichte des Bildsensors 23 - beliebig dicht abzutasten.

Um die erforderliche Auflösung für die Aufnahme steganographischer Information 12 zu erreichen, genügt - wie in Fig. 4 beispielhaft dargestellt - meist schon ein 2x2-Scan. (Es sind für höhere Auflösungen und bei häufig rechteckigen Pixelflächen des Sensors ebenfalls 3x4-Scans sinnvoll.)

Beim gewählten 2x2-Scan wird der Bildsensor 23 in einem rechteckigen Scanmuster in vier Schritten von seiner ursprünglichen Lage je zweimal entlang seiner Zeilen- und seiner Spaltenrichtung um Bruchteile seines Pixelabstandes P (hier: um P/2) hin- und herbewegt, so dass die dargestellten Pixel 234 die Positionen n.1 bis n.4 annehmen, wenn n die vergebene Pixelnummer ist. Das Ergebnis zeigt die rechte Darstellung von Fig. 4 in Form des dichten (möglicherweise auch überlappend aufgenommenen) Pixelmusters für das Teilbild 32 vom Passbild 11 des Dokuments 1 (vgl. Fig. 2).

In den nachfolgenden Beispielen werden auf Basis des erfindungsgemäßen Verfahrens noch weitere Lösungsvarianten beschrieben, die zwei umschaltbare Bildaufnahmen (Gesamtbild 31 und Teilbild 32) realisieren und mit preiswerteren Bildsensoren 23 bzw. kommerziell verfügbaren Kameratypen auskommen.

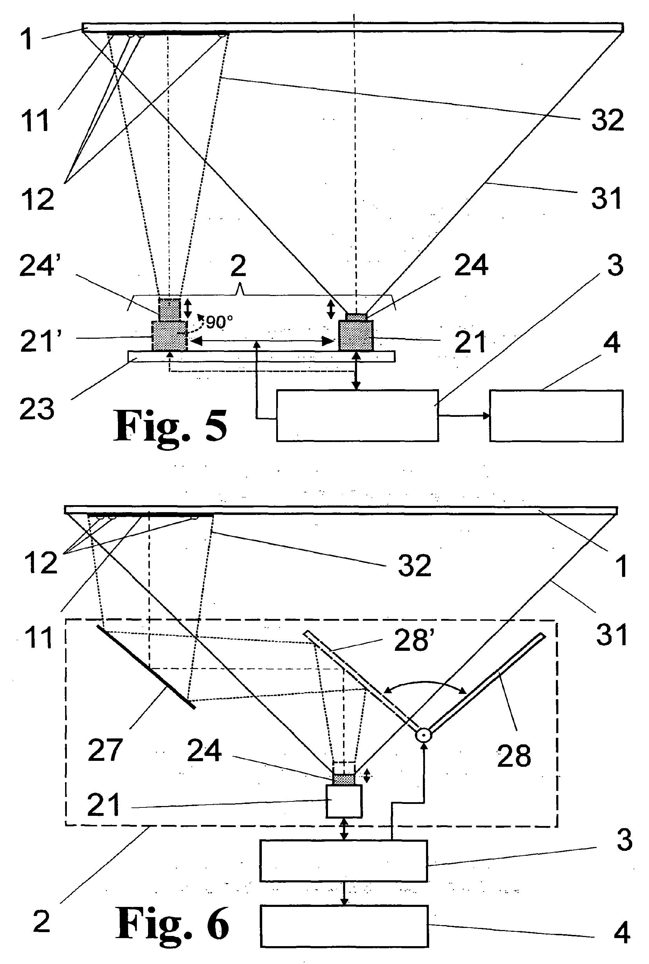

Dazu zeigt Fig. 5 eine Vorrichtung, die eine Kamera 21 mit einem Zoomobjektiv 24 verwendet, wobei die Kamera 21 in einer x-y-Führung 5 parallel zur Auflageebene des Dokuments 1 verschiebbar angeordnet ist.

Zum Aufnehmen des gesamten Dokuments 1 wird die Kamera 21 mittels der Kamerasteuereinheit 3 mittig über dem Dokument 1 positioniert und mittels des motorisierten Zoomobjektivs 24 das gesamte Dokument 1 auf den Bildsensor 23 (in Fig. 5 nicht einzeichnet) abgebildet. Das ausgelesene Gesamtbild 31 wird in die Auswerteeinheit 4 zur Bestimmung des Dokumententyps übertragen. Die daraus ermittelte Lage des steganographischen Bereiches (z.B. des Passbildes 11) wird der Kamerasteuereinheit 3 zur Positionierung der Kamera 21 für die Aufnahme der steganographischen Informationen 12 mitgeteilt.

Zur Erfassung des steganographischen Bereiches innerhalb des Passbildes 11 wird die Kamera 21 mittig über diesem positioniert. Vorzugsweise wird - um das Format des Passbildes 11 an die Rechteckform des Bildsensors 23 anzupassen - die Kamera 21 um 90° gegenüber der Lage des Gesamtbildes 31 gedreht und das Zoomobjektiv 24 so eingestellt, dass das Passbild 11 die gesamte Fläche des Bildsensors 23 ausfüllt. Unter dieser Voraussetzung kann auch mit einem preiswerten 1,3 Megapixel-CMOS-Sensor (z.B. LM9638, Hersteller: National Semiconductor Corp., San Jose, USA) die erhöhte Auflösung (> 500 dpi) für den steganographischen Bereich erreicht werden.

Wird die Kamera 21 mit der x-y-Führung 5 in die Position gebracht, in der sie das Teilbild 32 vom Passbild 11 aufnehmen soll, so sind zur Kennzeichnung dieser vorübergehenden Verschiebung die Kamera 21' und das Zoomobjektiv 24' gestrichelt dargestellt. Das so positionierte Zoomobjektiv 24' fokussiert die Abbildung des Passbildes 11. Erreicht die Kamera 21 mit einer Auflösung von 1280 x 1024 Bildpunkten in der Ausgangsposition zur Aufnahme des Gesamtbildes 31 nur eine Auflösung von

$$1280 \text{ Pixel}/126 \text{ mm} \times 25{,}4 \text{ mm/inch} = 258 \text{ dpi}$$

$$(\text{Sensorauflösung/Dokumentenbreite [in Zoll]})$$

Ist die Kamera 21 in der Teilbildposition 21' für die Detailaufnahme vom Passbild 11 um 90° gedreht (weil das Passbild 11 im Gegensatz zum Gesamtformat des Dokuments 1 im Hochformat ausgerichtet ist) eine Auflösung von:

$$1280 \text{ Pixel}/62{,}5 \text{ mm} \times 25{,}4 \text{ mm/Inch} = 520 \text{ dpi}$$

$$(\text{Sensorauflösung/Breite des Passbildes [in Zoll]})$$

Diese Berechnung verdeutlicht, dass die notwendige Auflösung von > 500 dpi für Hochsicherheitssteganogramme in der Teilbildposition 21' der Kamera 21 erreicht wird, obwohl der Bildsensor 23 lediglich 1,3 Megapixel aufweist. Will man allerdings ohne 90°-Drehung auskommen, muss ein Bildsensor 23 mit 1850 x 1280 Pixel (2,4 Megapixel) zum Einsatz kommen.

Eine gegenüber Fig. 5 modifizierte Variante der Bildaufnahmeeinheit 2 ist in Fig. 6 dargestellt. Anstelle einer Verschiebung der Kamera 21 wird der Abbildungsstrahlengang der Kamera 21 mittels eines feststehenden Spiegels 27 und eines Klappspiegels 28 vom Gesamtbild 31 auf einen Ausschnitt des Dokuments 1 gelenkt und mittels des Zoomobjektivs 24 ein mehrfach vergrößertes Teilbild 32 vom Passbild 11 auf den Bildsensor 23 (nur in Fig. 2 gezeichnet) abgebildet. Zur Aufnahme eines Gesamtbildes 31 des Dokumentes 1 befindet sich der Klappspiegel 28 außerhalb des Abbildungsstrahlengangs des Gesamtbildes 31. Das Zoomobjektiv 24 der Kamera 21 bildet das gesamte Dokument 1 auf den Bildsensor 23 (nicht gezeichnet) ab. Danach wird der Klappspiegel 28 in die mit 28' bezeichnete Position im Strahlengang der Kamera 21 eingeschwenkt und das Zoomobjektiv 24 über den feststehenden Spiegel 27 auf das Passbild 11 gezoomt. Zur Erreichung der maximal möglichen Auflösung des vorzugsweise eingesetzten Bildsensors 23 (mit nur 1,3 Megapixel) wird die Kamera 21 zusätzlich um 90° gedreht, wie bereits zu Fig. 5 beschrieben.

Die Umschaltung zwischen den zwei Bildaufnahmezuständen wird - wie in den vorherigen Beispielen - durch die Kamerasteuereinheit 3 bewirkt, wobei, der Umschaltung vorausgehend, aus dem Gesamtbild 31 des Dokuments 1 wieder der Dokumententyp bestimmt wird, um das Umklappen des Klappspiegels 28 und die Einstellung des Zoomobjektivs 24 für die Bildaufnahme des Passbildes 11 als Träger der steganographischen Information 12 zu steuern.

Die Berechnung der Auflösung innerhalb des Gesamtbildes 31 und des Teilbildes 32 entspricht der Variante mit x-y-Führung 5 der Kamera 21 nach Fig. 5.

Wird der feststehende Spiegel 27 größer ausgeführt, als in Fig. 6 dargestellt, oder ebenfalls leicht schwenkbar gelagert, kann über die Variation der Spiegelkippwinkel erreicht werden, dass der interessierende Bereich - auch wenn er an beliebiger Position auf dem Dokument 1 liegt - hochaufgelöst aufgenommen werden kann.

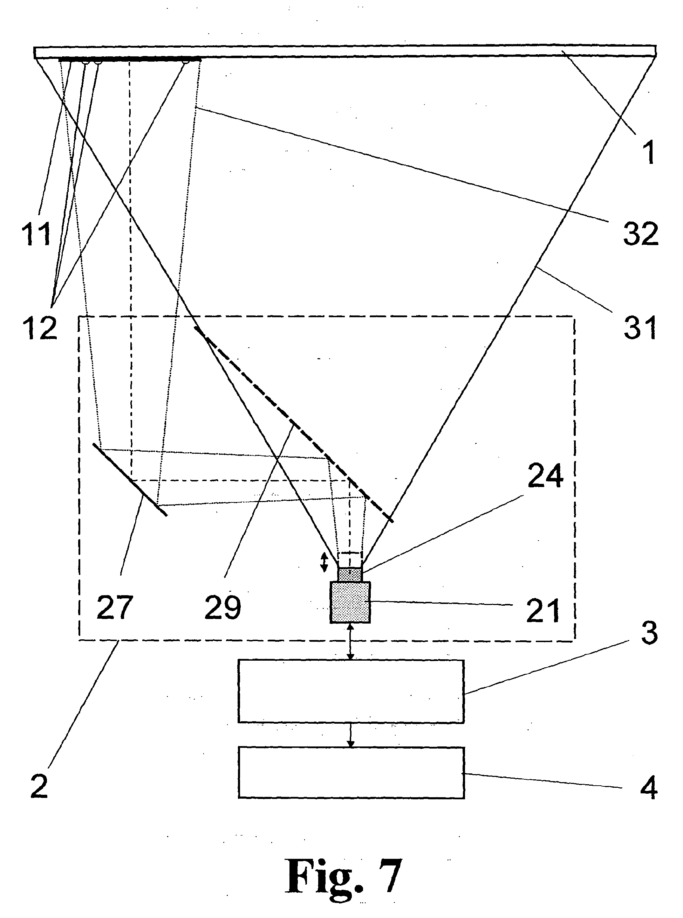

In Fig. 7 wird eine weitere gegenüber Fig. 5 modifizierte Bildaufnahmeeinheit 2 gezeigt, bei der ähnlich wie in Fig. 6 die Verschiebung der Kamera 21 durch eine Spiegelkonstruktion ersetzt wird. In diesem Beispiel ist die Positionsänderung der Kameraabbildung durch einen festen Spiegel 27 und einen halbdurchlässigen Spiegel 29 realisiert. Der Strahlengang für die Aufnahme des Gesamtbildes 31 durchdringt den halbdurchlässigen Spiegel 29. Das Zoomobjektiv 24 der Kamera 21 bildet das gesamte Dokument 1 auf den Bildsensor 23 der Kamera 21 ab.

Wird vorausgesetzt, dass sich die steganographische Information 12 im Passbild 11 des Dokumentes 1 befindet und der Bildsensor 23 wiederum nur 1,3 Megapixel aufweist, wird die Kamera 21 um 90° gedreht und das Zoomobjektiv 24 visiert in Reflexion über den halbdurchlässigen Spiegel 29 und den feststehenden Spiegel 27 das Passbild 11 in einem kleineren Ausschnitt des Dokuments 1 an.

Nach Aufnahme und Analyse des Gesamtbildes 31 wird aufgrund des ermittelten Dokumententyps das Gesichtsfeld der Kamera 21 auf das Passbild 11 als Träger der steganographischen Information 12 umgeschaltet, indem die Kamerasteuereinheit 3 das Zoomobjektiv 24 entsprechend steuert und den festen Spiegel 27, dessen Reflexionsvermögen (z.B. durch eine Flüssigkristallschicht) bei Aufnahme des Gesamtbildes 31 in seinem Reflexionsvermögen gedämpft ist, freischaltet. Alle übrigen Vorgänge laufen in gleicher Weise, wie zu Fig. 3 bis 6 beschrieben, ab.

Für den Fall, dass die steganographische Information 12 in einem anderen Bereich des Dokuments 1 eingefügt ist, der nicht "hochformatig" aufgenommen werden muss, oder dass eine Kamera 21 mit 2,4 Megapixel-Bildsensor zur Verfügung steht, kann auf die Drehung der Kamera 21 verzichtet werden. Die Abschätzung der Auflösungsanforderungen sind dabei analog zu der Variante der Kamera 21 mit x-y-Führung 5 (gemäß Fig. 5).

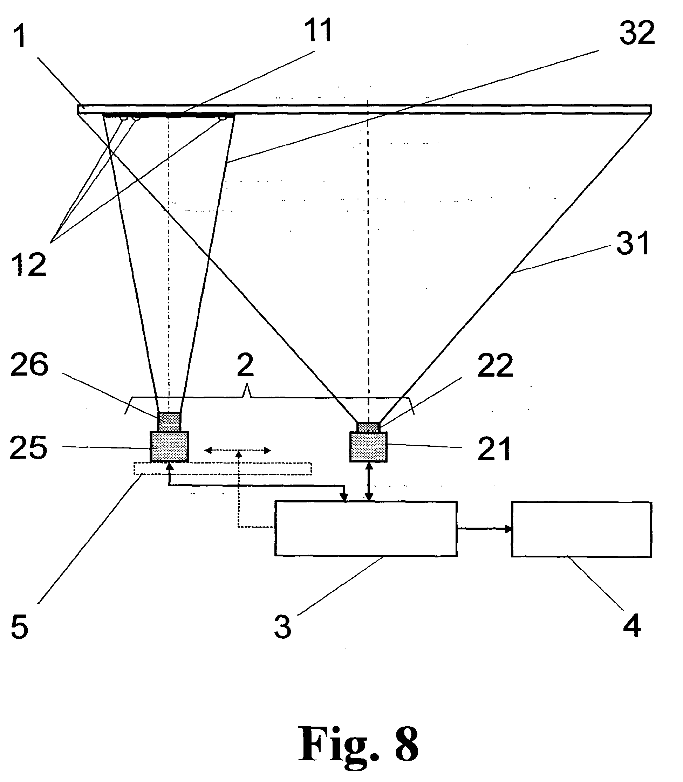

Fig. 8 zeigt eine noch andere Ausgestaltung der Erfindung. Anstelle der (gemäß Fig. 5) beweglich (zur Teilbildposition 21') angeordneten Kamera 21 mit 1,3 Megapixel und Zoomobjektiv 24 werden zwei fest eingestellte Kameras 21 und 25 (mit gleicher Pixelzahl) verwendet, von denen die erste das gesamte Dokument 1 über ein weitwinkliges Aufnahmeobjektiv 22 und die zweite Kamera 25 mittels ihres Objektivs 26 den Bereich des Passbildes 11 erfasst. Die Kameras 21 und 25 benötigen keine Zoomobjektive wie die vorherigen Ausführungsbeispiele gemäß den Fig. 5 bis 7, sondern verfügen vorzugsweise über je ein Objektiv 22 bzw. 26 mit jeweils fester Brennweite und Blende. Die erste Kamera 21 bildet das gesamte Dokument 1 ab, während die zweite Kamera 25, deren Bildebene - falls sie den "hochformatigen" Bereich des Passbildes 11 aufnehmen soll - um 90° gedreht zu der der ersten Kamera 21 angeordnet ist, das vergrößerte Teilbild 32 des Bereiches mit steganographischer Information 12 erfasst.

Zur Aufnahme des gesamten Dokumentes 1 aktiviert die Kamerasteuereinheit 3 die Kamera 21 und sorgt für eine Aufnahme des Gesamtbildes 31. Danach wird die zweite Kamera 25 aktiviert und eine Aufnahme des Passbildes 11 gemacht. Die Berechnung der Auflösung ist identisch zum Beispiel nach Fig. 3.

Bei der Gestaltungsvariante von Fig. 8 wird kein motorisiertes Zoomobjektiv 24 benötigt und es geht keine Zeit durch Zoomen/Fokussieren der Objektive 24 und 26 oder durch wechselnde Positionierung einer Kamera 21 verloren. Somit müssen keine mechanisch beweglichen Teile verwendet werden, solange nicht für verschiedene Dokumententypen unterschiedliche Positionen der steganographischen Bereiche der Dokumente 1 einzustellen sind.

Bei einem Preisunterschied vom Faktor 10 zwischen einem 1,3 Megapixel-Sensor und einem 5 Megapixel-Sensor, ist der Einsatz von zwei gleichwertigen, kommerziell verfügbaren Kameras 21 und 25 (mit 1,3 Megapixel) auch unter Kostengesichtspunkten eine attraktive Lösung.

Alle vier obigen Lösungen (gemäß den Fig. 5, 6, 7 und 8) zeichnen sich dadurch aus, dass sie mit einem preiswerten CMOS-Sensor in der Lage sind, auch Hochsicherheitsmerkmale von Dokumenten 1 (z.B. Steganogramme in Passbildern 11 von Personaldokumenten) mit hoher Auflösung auszulesen und einer Auswerteeinheit 4 zuzuführen, die über entsprechende Datenbankzugriffe und eine geeignete Auswertesoftware verfügt. Dabei wird ein Gesamtbild 31 des Dokumentes 1 in optimal niedrig bemessener Auflösung erfasst, so dass die anfallenden Datenmengen reduziert und die Ressourcenanforderungen an die Auswerteeinheit 4 gering gehalten werden.

Durch intelligente Aufnahmesteuerung mittels der Kamerasteuereinheit 3 wird sichergestellt, dass die zusätzliche hochauflösende Aufnahme eines Bereiches mit Hochsicherheitsmerkmalen nur bei Dokumenten 1 ausgeführt wird, die über steganographische Informationen 12 (z.B. im Passbild 11) verfügen. Dadurch wird die Verarbeitungszeit pro Dokument 1 bei fehlender steganographischer Information 12 nicht unnötig erhöht und bei Dokumenten mit versteckter Information 12 effektiv in die sonstigen optischen Auslese- und Testprozeduren eingeordnet.

Unabhängig davon, welche der obigen Varianten zur Dokumentabtastung mit unterschiedlicher Bildauflösung verwendet wird, ist stets eine intelligente Aufnahmesteuerung notwendig, die entsprechend dem aktuell zu verarbeitenden Dokumententyp entscheidet, ob oder wann, wo und wie ein zusätzliches hochauflösenden Teilbild 32 erforderlich ist.

Bezugszeichenliste

1    Dokument
11   Passbild
12   versteckte (steganographische) Information

2    Bildaufnahmeeinheit
21   Kamera
22   Aufnahmeobjektiv (fest)
23   Bildsensor
231  Auslesebereich (WOI-Bereich)
232  Register
233  interessierender Bildausschnitt
234  Pixel (lichtempfindliche Elemente des Bildsensors)
24   Zoomobjektiv
25   zweite Kamera
26   Objektiv
27   (fester) Spiegel
28   Klappspiegel
29   halbdurchlässiger Spiegel

3    Kamerasteuereinheit
31   Gesamtbild
32   Teilbild (Ausschnitt des Dokuments)

4    Auswerteeinheit

5    x-y-Führung

P    Pixelabstand

**Patentansprüche**

1.  Verfahren zur Bildaufnahme für die Datenerfassung und Sicherheitsprüfung von Dokumenten, bei dem ein zu prüfendes Dokument mittels einer Bildaufnahmeeinheit zweidimensional abgetastet wird, insbesondere zur automatisierten Prüfung der Echtheit von Dokumenten, , **gekennzeichnet durch** die Schritte

    - Aufnahme eines Gesamtbildes des Dokuments mit relativ geringer Bildauflösung, wobei die Auflösung wenigstens so groß gewählt wird, dass aus dem aufgenommenen Bild ein Dokumententyp bestimmt werden kann,
    - Ermittlung des Dokumententyps und Zuordnung gespeicherter Sicherheitsmerkmale zum erkannten Dokumententyp,
    - Prüfung, ob der erkannte Dokumententyp ein definiertes Sicherheitsmerkmal aufweist, für dessen optische Erfassung eine höhere Bildauflösung notwendig ist, die erheblich größer als die Bildauflösung bei der Aufnahme des Gesamtbildes sein muss,
    - Umschalten der Bildaufnahmeeinheit auf die höhere Bildauflösung und auf eine eingeschränkte Bildaufnahme in einem interessierenden Bereich des Dokuments, falls das Dokument einen solchen Bereich mit definiertem Sicherheitsmerkmal enthält,
    - Aufnahme eines hochaufgelösten Teilbildes vom interessierenden Bereich und Auswertung des aufgenommenen Teilbildes, falls das Sicherheitsmerkmal vorhanden ist,
    - Prüfung der Echtheit des Dokuments **durch** Vergleich der aus mindestens einer Bildaufnahme für ein Sicherheitsmerkmal ermittelten Dokumentendaten mit Daten aus dem aufgenommenen Gesamtbild und/oder Daten aus einer Datenbank.

2. Verfahren nach Anspruch 1, **dadurch gekennzeichnet, dass** zur Aufnahme des Gesamtbildes eines Personaldokuments eine Bildauflösung von ca. 250 dpi verwendet wird.

3. Verfahren nach Anspruch 1, **dadurch gekennzeichnet, dass** als interessierender Bereich ein Teilbild des Dokuments mit Hochsicherheitsmerkmalen aus versteckten Informationen bei höherer Bildauflösung ausgelesen wird.

4. Verfahren nach Anspruch 3, **dadurch gekennzeichnet, dass** als interessierender Bereich eines Personaldokuments mit versteckten Informationen ein Teilbild mit dem Passbild ausgelesen wird.

5. Verfahren nach Anspruch 3, **dadurch gekennzeichnet, dass** zur Aufnahme des interessierenden Bereiches mit einem Hochsicherheitsmerkmal eines Personaldokuments eine Bildauflösung von mindestens 500 dpi angewendet wird.

6. Verfahren nach Anspruch 1, **dadurch gekennzeichnet, dass** nach Ermittlung des Dokumententyps eine Reihenfolge von unterschiedlichen Bildaufnahmen, vorzugsweise UV-, IR-, Hologramm- oder Beugungsaufnahmen sowie hochaufgelösten Aufnahmen für Hochsicherheitsmerkmale, festgelegt wird.

7. Verfahren nach Anspruch 6, **dadurch gekennzeichnet, dass** die Reihenfolge von unterschiedlichen Bildaufnahmen in Abhängigkeit von der Vertrauenswürdigkeit der vorhandenen Sicherheitsmerkmale des Dokumententyps festgelegt wird.

8. Verfahren nach Anspruch 6, **dadurch gekennzeichnet, dass** die Reihenfolge von unterschiedlichen Bildaufnahmen in Abhängigkeit vom Auswerteaufwand festgelegt wird.

9. Anordnung zur Bildaufnahme für die Datenerfassung und Sicherheitsprüfung von Dokumenten, bei dem eine Bildaufnahmeeinheit zur zweidimensionalen Abtastung eines zu prüfenden Dokuments vorhanden ist, insbesondere zur automatisierten Prüfung der Echtheit von Dokumenten, in denen spezielle Sicherheitsmerkmale eingearbeitet sind, **dadurch gekennzeichnet, dass**

   - die Bildaufnahmeeinheit einen zweidimensionalen Bildsensor aufweist,
   - der Bildsensor mindestens für eine erste Bildaufnahme über der Auflagefläche so eingerichtet ist, um ein Gesamtbild des Dokuments formatfüllend auf dem Bildsensor abzubilden und mit relativ niedriger Auflösung auszulesen,
   - eine Kamerasteuereinheit zur Umschaltung der Bildaufnahmeeinheit von einem Gesamtbild- in einen Teilbild-Aufnahmemodus mit dem Bildsensor verbunden ist, um neben der üblichen Steuerung der Bildsensorauslesung ein Teilbild von einem eingeschränkten interessierenden Bereich des Dokuments zur Auswertung von speziellen Sicherheitsmerkmalen mit höherer Bildauflösung aufzunehmen, und
   - eine Auswerteeinheit der Bildaufnahmeeinheit nachgeordnet ist, die Mittel zur Bestimmung des Dokumententyps aus mindestens einem Gesamtbild des Dokuments aufweist, wobei in Abhängigkeit vom ermittelten Dokumententyp die Kamerasteuereinheit beeinflussbar ist zur Einstellung der Bildaufnahmeeinheit für die hochaufgelöste Bildauslesung eines Teilbildes vom interessierenden Bereich des Dokuments.

10. Anordnung nach Anspruch 9, **dadurch gekennzeichnet, dass** für die Umschaltung zwischen den Aufnahmen von Gesamtbild und Teilbild die Bildsensoreinheit ein hochauflösendes Aufnahmeobjektiv und einen Bildsensor mit sehr hoher Pixelzahl und variabler Auslesesteuerung aufweist, wobei der Bildsensor zur Aufnahme des Gesamtbildes mit reduzierter Auflösung auslesbar ist, indem definierte Zeilen und Spalten übersprungen werden, und zur Aufnahme des Teilbildes mit höherer Auflösung nur ein Pixelbereich des Bildsensors, auf den der interessierende Bereich des Dokuments abgebildet ist, auslesbar ist.

11. Anordnung nach Anspruch 10, **dadurch gekennzeichnet, dass** in der Auswerteeinheit Speichermittel vorhanden sind, aus denen nach der Ermittlung des Dokumententyps Art und Position der speziellen Sicherheitsmerkmale abrufbar sind, um den auszulesenden Pixelbereich des Bildsensors zu programmieren.

**12.** Anordnung nach Anspruch 9, **dadurch gekennzeichnet, dass**
für die Umschaltung zwischen den Aufnahmen von Gesamtbild und Teilbild die Bildsensoreinheit ein hochauflösendes Aufnahmeobjektiv und einen Bildsensor mit für die Aufnahme des Gesamtbildes ausreichender Pixelzahl und variabler Auslesesteuerung sowie einem Mikroscansystem aufweist, wobei zur Aufnahme des hochaufgelösten Teilbildes der Bildsensor in einem Scanmuster zur Zwischenpixelabtastung verschiebbar ist, so dass zusätzlich zur Abtastposition des Gesamtbildes Verschiebungen um Bruchteile des Pixelabstandes in Zeilen- und Spaltenrichtung ausgeführt werden, und nur ein Pixelbereich des Bildsensors, auf den der interessierende Bereich des Dokuments abgebildet ist, auslesbar ist.

**13.** Anordnung nach Anspruch 12, **dadurch gekennzeichnet, dass**
der Bildsensor auf einem piezoelektrischen Tischsystem aufgebracht ist.

**14.** Anordnung nach Anspruch 12, **dadurch gekennzeichnet, dass**
der Bildsensor in einem 2x2-Scanmuster bewegbar ist.

**15.** Anordnung nach Anspruch 9, **dadurch gekennzeichnet, dass**
der interessierende Bereich Hochsicherheitsmerkmale mit versteckten Informationen aufweist.

**16.** Anordnung nach Anspruch 15, **dadurch gekennzeichnet, dass**
der interessierende Bereich ein Passbild auf dem Dokument ist, in dem spezielle Daten des Dokuments zur Fälschungssicherung in das Passbild steganographisch integriert sind.

**17.** Anordnung nach Anspruch 9, **dadurch gekennzeichnet, dass**
für die Umschaltung zwischen den Aufnahmen von Gesamtbild und Teilbild die Bildsensoreinheit eine Kamera mit einem Zoomobjektiv und einem Bildsensor mit mittlerer Pixelzahl aufweist und zur Umschaltung von der Aufnahme des Gesamtbildes zur Aufnahme des Teilbildes parallel zur Auflagefläche des Dokuments verschiebbar angeordnet ist, wobei die Kamera für die Aufnahme des Teilbildes mittig über dem interessierenden Bereich des Dokuments positioniert ist und der interessierende Bereich des Dokuments durch Hineinzoomen mit dem Aufnahmeobjektiv formatfüllend und infolgedessen mit höherer Bildauflösung auf den Bildsensor abgebildet wird.

**18.** Anordnung nach Anspruch 17, **dadurch gekennzeichnet, dass**
die Kamera mittels einer x-y-Führung parallel zur Auflagefläche des Dokuments verschiebbar ist.

**19.** Anordnung nach Anspruch 18, **dadurch gekennzeichnet, dass**
die Kamera beim Umschalten zur Aufnahme des Teilbildes zusätzlich um 90° gegenüber der Lage bei der Aufnahme des Gesamtbildes gedreht wird, um die Rechteckform des Bildsensors besser an ein Hochformat eines Passbildes als interessierenden Bereich gegenüber einem Querformat des Gesamtbildes des Dokuments anzupassen.

**20.** Anordnung nach Anspruch 9, **dadurch gekennzeichnet, dass**
für die Umschaltung zwischen den Aufnahmen von Gesamtbild und Teilbild die Bildsensoreinheit eine Kamera mit einem Zoomobjektiv und einem Bildsensor mit mittlerer Pixelzahl aufweist und zur Umschaltung von der Aufnahme des Gesamtbildes zur Aufnahme des Teilbildes eine Spiegelanordnung aus Umlenkspiegel und Klappspiegel vorhanden ist, wobei die Kamera für die Aufnahme des Teilbildes unverschiebbar über dem Dokument positioniert ist und der interessierende Bereich des Dokuments durch Einschwenken des Klappspiegels und durch Hineinzoomen mit dem Aufnahmeobjektiv in den über den Klappspiegel und Umlenkspiegel räumlich versetzten Abbildungsstrahlengang formatfüllend und infolgedessen mit höherer Bildauflösung auf den Bildsensor abgebildet wird.

**21.** Anordnung nach Anspruch 9, **dadurch gekennzeichnet, dass**
für die Umschaltung zwischen den Aufnahmen von Gesamtbild und Teilbild die Bildsensoreinheit eine Kamera mit einem Zoomobjektiv und einem Bildsensor mit mittlerer Pixelzahl aufweist und zur Umschaltung von der Aufnahme des Gesamtbildes zur Aufnahme des Teilbildes eine Spiegelanordnung aus Umlenkspiegel und halbdurchlässigem Spiegel vorhanden ist, wobei die Kamera für die Aufnahme des Teilbildes unverschiebbar über dem Dokument positioniert ist und der interessierende Bereich des Dokuments durch Aktivieren des Umlenkspiegels und durch Hineinzoomen mit dem Aufnahmeobjektiv in den über halbdurchlässigen Spiegel und Umlenkspiegel räumlich versetzten Abbildungsstrahlengang formatfüllend und infolgedessen mit höherer Bildauflösung auf den Bildsensor abgebildet wird.

**22.** Anordnung nach Anspruch 21, **dadurch gekennzeichnet, dass**
die Kamera für die Aufnahme des Teilbildes zusätzlich um 90° gegenüber der Lage für die Aufnahme des Gesamtbildes gedreht wird, um eine Rechteckform des Bildsensors besser an ein Hochformat eines Passbildes als interessierenden Bereich gegenüber einem Querformat des Gesamtbildes des Dokuments anzupassen.

**23.** Anordnung nach Anspruch 21, **dadurch gekennzeichnet, dass**
der Umlenkspiegel mit einer den Reflexionsgrad steuernden Schicht überzogen ist.

**24.** Anordnung nach Anspruch 23, **dadurch gekennzeichnet, dass**
der Umlenkspiegel mit einer Flüssigkristallschicht überzogen ist.

**25.** Anordnung nach Anspruch 21, **dadurch gekennzeichnet, dass**
der Umlenkspiegel als Kippspiegel ausgebildet ist, um den Abbildungsstrahlengang vom interessierenden Bereich des Dokuments nur für die Aufnahme des Teilbildes auf den halbdurchlässigen Spiegel zu übertragen.

**26.** Anordnung nach Anspruch 9, **dadurch gekennzeichnet, dass**
für die Umschaltung zwischen den Aufnahmen von Gesamtbild und Teilbild die Bildsensoreinheit eine erste und eine zweite Kamera mit je einem Bildsensor mittlerer Pixelzahl und unterschiedlichen Aufnahmeobjektiven aufweist, wobei die erste Kamera zur Aufnahme des Gesamtbildes starr und mittig über dem Dokument angeordnet ist, die zweite Kamera zur Aufnahme des Teilbildes mittig über dem interessierenden Bereich des Dokuments angeordnet ist und die Kamerasteuerung Mittel zur Umschaltung zwischen der Auslesung der ersten und der zweiten Kamera aufweist.

**27.** Anordnung nach Anspruch 26, **dadurch gekennzeichnet, dass**
die erste und die zweite Kamera gleichwertige Bildsensoren aufweisen.

**28.** Anordnung nach Anspruch 27, **dadurch gekennzeichnet, dass**
die zweite Kamera für die Aufnahme des Teilbildes gegenüber der Lage der ersten Kamera für die Aufnahme des Gesamtbildes um 90° gedreht angeordnet ist, um eine Rechteckform des Bildsensors besser an ein Hochformat eines Passbildes als interessierenden Bereich im Teilbild und einem Querformat des Dokuments im Gesamtbild anzupassen.

**Fig. 1**

REPUBLIK PHANTASIA

P        PHAN           123456789098

MUSTERMANN
GEB. BEISPIEL

FRIEDOLIN

PHANTASISCH            11.11.1911

M        BERGDORF

12.03.2004              12.03.2014

LOTTERAMT
LUMMERSTADT

P<PHAN<<MUSTERMANN<<FRIEDOLIN<<<<<<<<<<
123456789098PHAN<<1111112M1403121<<<<<<<<<8

32        11        **Fig. 2**        31        1

**Fig. 3**

EP 1 630 721 A1

| 1.1 | 1.2 | 2.1 | 2.2 | 3.1 | 3.2 |
|-----|-----|-----|-----|-----|-----|
| 1.4 | 1.3 | 2.4 | 2.3 | 3.4 | 3.3 |
| 4.1 | 4.2 | 5.1 | 5.2 | 6.1 | 6.2 |
| 4.4 | 4.3 | 5.4 | 5.3 | 6.4 | 6.3 |
| 7.1 | 7.2 | 8.1 | 8.2 |     |     |
| 7.4 | 7.3 | 8.4 | 8.3 |     |     |

23

Scan-Muster

P 234

P/2 234

**Fig. 4**

**Fig. 5**

**Fig. 6**

**Fig. 7**

**Fig. 8**

**Europäisches Patentamt**

# EUROPÄISCHER RECHERCHENBERICHT

Nummer der Anmeldung

EP 05 01 3810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br>A | US 6 694 041 B1 (BRUNK HUGH L)<br>17. Februar 2004 (2004-02-17)<br>* Zusammenfassung; Abbildung 4 *<br>* Spalte 1, Zeile 10 - Zeile 19 *<br>* Spalte 1, Zeile 52 - Zeile 67 *<br>* Spalte 4, Zeile 54 - Zeile 60 *<br>* Spalte 8, Zeile 9 - Spalte 9, Zeile 20 * | 1-5,9,<br>15,16<br>11 | G06K9/20<br>G06T1/00<br>H04N1/04<br>G07D7/20 |
| X | WO 2004/051917 A (DIGIMARC CORPORATION;<br>RODRIGUEZ, TONY, F; REED, ALASTAIR, M;<br>SHARMA, R) 17. Juni 2004 (2004-06-17)<br>* Zusammenfassung; Abbildungen 17,19 *<br>* Seite 1, Zeile 21 - Zeile 29 *<br>* Seite 4, Zeile 3 - Zeile 18 *<br>* Seite 19, Zeile 3 - Seite 23, Zeile 20 *<br>* Seite 33 - Seite 39, Zeile 23 *<br>* Seite 48, Zeile 8 - Seite 49, Zeile 20 * | 1-9,15,<br>16 | |
| A | EP 0 453 245 A (CANON KABUSHIKI KAISHA)<br>23. Oktober 1991 (1991-10-23)<br>* Zusammenfassung; Abbildung 3 *<br>* Spalte 4, Zeile 38 - Spalte 5, Zeile 3 * | 9 | |
| A | US 6 714 665 B1 (HANNA KEITH JAMES ET AL)<br>30. März 2004 (2004-03-30)<br>* Zusammenfassung; Abbildungen 1a,1c *<br>* Spalte 62, Zeile 41 - Spalte 63, Zeile 49 *<br>* Spalte 64, Zeile 9 - Zeile 30 * | 4 | RECHERCHIERTE SACHGEBIETE (Int.Cl.7)<br><br>G06K<br>G06T<br>H04N<br>G07D |
| D,A | EP 1 345 193 A (JURA-TRADE KERESKEDELMI<br>KFT) 17. September 2003 (2003-09-17)<br>* Zusammenfassung; Abbildung 14 *<br>* Absatz '0002! - Absatz '0037! * | 4 | |

-/--

Der vorliegende Recherchenbericht wurde für alle Patentansprüche erstellt

| Recherchenort | Abschlußdatum der Recherche | Prüfer |
|---|---|---|
| München | 11. Oktober 2005 | Müller, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**Europäisches Patentamt**

# EUROPÄISCHER RECHERCHENBERICHT

Nummer der Anmeldung

EP 05 01 3810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 05 835 A1 (BUNDESDRUCKEREI GMBH) 16. August 2001 (2001-08-16) | 1,9 | |
| Y | * Zusammenfassung; Ansprüche 1,12 * | 10-14, 17,18,20 | |
| | * Spalte 2, Zeile 34 - Spalte 3, Zeile 19 * | | |
| | * Spalte 6, Zeile 20 - Zeile 29 * | | |
| | * Spalte 8, Zeile 1 - Zeile 49 * | | |
| | * Spalte 9, Zeile 6 - Zeile 26 * | | |
| | ----- | | |
| Y | WO 00/59206 A (RAMOT UNIVERSITY AUTHORITY FOR APPLIED RESEARCH &; MENDLOVIC, DAVID; Z) 5. Oktober 2000 (2000-10-05) * Zusammenfassung * * Seite 1 - Seite 2 * * Seite 3, Absatz 4 - Absatz 5 * | 12-14 | |
| | ----- | | |
| Y | DE 103 22 884 A1 (ELMO COMPANY LTD., NAGOYA) 11. Dezember 2003 (2003-12-11) * Absatz '0010! * | 10,11 | |
| | ----- | | RECHERCHIERTE SACHGEBIETE (Int.Cl.7) |
| Y | US 6 239 883 B1 (LAM KAI YIU ET AL) 29. Mai 2001 (2001-05-29) * Zusammenfassung * * Spalte 1, Zeile 65 - Spalte 2, Zeile 36 * * Spalte 4, Zeile 20 - Zeile 46 * | 17,18 | |
| | ----- | | |
| Y | US 5 907 411 A (HAN ET AL) 25. Mai 1999 (1999-05-25) * Zusammenfassung * * Spalte 4, Zeile 39 - Spalte 6, Zeile 6 * | 20 | |
| | ----- | | |
| A | US 2003/076543 A1 (LAN CHIA-TSUI) 24. April 2003 (2003-04-24) * das ganze Dokument * | 21-25 | |
| | ----- | | |

-/--

Der vorliegende Recherchenbericht wurde für alle Patentansprüche erstellt

| Recherchenort | Abschlußdatum der Recherche | Prüfer |
|---|---|---|
| München | 11. Oktober 2005 | Müller, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie,übereinstimmendes
    Dokument

EPO FORM 1503 03.82 (P04C03)

**Europäisches Patentamt**

# EUROPÄISCHER RECHERCHENBERICHT

Nummer der Anmeldung

EP 05 01 3810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 2004/003627 A (MICROVISION, INC; LIPPERT, THOMAS, M; TEGREENE, CLARENCE, T) 8. Januar 2004 (2004-01-08) * Zusammenfassung; Abbildung 16 * * Seite 20, Zeile 3 - Zeile 17 * ----- | 13 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 11. Oktober 2005 | Müller, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

# EP 1 630 721 A1

**Europäisches**
**Patentamt**

Nummer der Anmeldung

EP 05 01 3810

---

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches**
**Patentamt**

**MANGELNDE EINHEITLICHKEIT**
**DER ERFINDUNG**
**ERGÄNZUNGSBLATT B**

Nummer der Anmeldung

EP 05 01 3810

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9,15,16

   Bildverarbeitungsverfahren zur Sicherheitsprüfung von Dokumenten durch niedrigauflösende Bestimmung von Dokumententyp und erwarteten Sicherheitsmerkmalen gefolgt von hochauflösender Ermittlung und Prüfung dieser Sicherheitsmerkmale.

   ---

2. Ansprüche: 10-14,17-28

   Physische Ausgestaltung einer Anordnung zur Bilderfassung und -analyse in mehreren Auflösungen.

   ---

## ANHANG ZUM EUROPÄISCHEN RECHERCHENBERICHT
## ÜBER DIE EUROPÄISCHE PATENTANMELDUNG NR.

EP 05 01 3810

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2005

| Im Recherchenbericht angeführtes Patentdokument | Datum der Veröffentlichung | Mitglied(er) der Patentfamilie | Datum der Veröffentlichung |
|---|---|---|---|
| US 6694041 B1 | 17-02-2004 | US 2004258273 A1<br>US 2002054355 A1 | 23-12-2004<br>09-05-2002 |
| WO 2004051917 A | 17-06-2004 | AU 2003293087 A1<br>EP 1579622 A1 | 23-06-2004<br>28-09-2005 |
| EP 0453245 A | 23-10-1991 | DE 69122799 D1<br>DE 69122799 T2<br>JP 4003279 A<br>US 5285294 A | 28-11-1996<br>13-03-1997<br>08-01-1992<br>08-02-1994 |
| US 6714665 B1 | 30-03-2004 | KEINE | |
| EP 1345193 A | 17-09-2003 | SI 1048168 T1 | 29-02-2004 |
| DE 10005835 A1 | 16-08-2001 | AU 3371901 A<br>WO 0160047 A2<br>EP 1195045 A2 | 20-08-2001<br>16-08-2001<br>10-04-2002 |
| WO 0059206 A | 05-10-2000 | AU 3453000 A<br>EP 1169847 A1 | 16-10-2000<br>09-01-2002 |
| DE 10322884 A1 | 11-12-2003 | JP 2003348387 A<br>US 2005046811 A1 | 05-12-2003<br>03-03-2005 |
| US 6239883 B1 | 29-05-2001 | US 2001013957 A1<br>US 2001050784 A1 | 16-08-2001<br>13-12-2001 |
| US 5907411 A | 25-05-1999 | US 6163387 A | 19-12-2000 |
| US 2003076543 A1 | 24-04-2003 | CN 1414410 A | 30-04-2003 |
| WO 2004003627 A | 08-01-2004 | KEINE | |

EPO FORM P0461

Für nähere Einzelheiten zu diesem Anhang : siehe Amtsblatt des Europäischen Patentamts, Nr. 12/82